# EUROPEAN PATENT APPLICATION

(11) **EP 1 542 479 A1**
(43) Date of publication of application: **15.06.2005**
(21) Application number: 03293083.6
(22) Date of filing: 10.12.2003
(51) Int. Cl.: H04Q 7/22

(54) **A method of providing a link to an area-specific service to a mobile terminal**

(71) Applicant: ALCATEL, 75008 Paris (FR)
(72) Inventor: Daigremont, Johann, 92220 Bagneux (FR); Merheb, Patrick, 92800 Puteaux (FR)
(74) Representative: Richardt, Markus Albert, Dipl.-Ing.

(57) **Abstract**

The present invention relates to a method of providing a link to an area-specific service to a mobile terminal via a wireless network covering at least two areas, each area having at least one access point, the method comprising:
- transmitting data being indicative of an assignment of the mobile terminal to one of the access points to a network component,
- accessing of data being indicative of an assignment of at least one link to the one of the access points by the network component,
- sending of the at least one link from the network component to the mobile terminal for a users selection of the area-specific service.

## Description

### Field of the invention

The present invention relates to the field of telecommunication, and more particularly to location based services.

Background and prior art

Location based services focus on the problem of providing value-added services to subscribers based on the location of a wireless device within a wireless network.

According to one type of location based wireless service, subscribers obtain information on businesses located in the vicinity of the wireless device. As subscribers move throughout the wireless network with their wireless device, they may enter requests for location information related to particular types of businesses.

The requests for the location of the wireless device are processed in the Gateway Mobile Location Center or another network platform to determine the location area, cell identity with geographical coordinates or the like, of the requesting wireless device. The device location information is provided to a relational database that identifies businesses located within or near the location of the wireless device and provides the business location information to the wireless device. In some cases, the service provider may use information provided by the subscriber to provide the business location information to the device.

For example, a subscriber could specify certain preferred business, such as a preferred hotel chain. When the location request is received, the subscriber information is used to retrieve and provide information about the preferred hotels matching the subscriber's information.

### Summary of the invention

The present invention provides a method of providing a link to an area-specific service to a mobile terminal via wireless network that covers at least two areas.

Each area of the network has at least one access point that provides coverage for that area. The term 'access point' as used herein encompasses all network components that provide radio coverage for a given area or cell, such as a base station, node-B and the like. Further, the term 'access point' does also encompass the mobile terminals themselves in case of an ad-hoc network such as IEEE802.11-type networks, as in such ad-hoc networks the mobile terminals themselves can act as access points.

When a mobile terminal is activated the user logs on and a network registration procedure is performed. As a result of the registration procedure the mobile terminal is assigned to one of the access points that provides radio coverage to the location where the mobile terminal is presently located. Data being indicative of the assignment of the mobile terminal to one of the access points is transmitted to a network component, such as a location server.

The various areas covered by the wireless network are defined by a logical mapping of access points to areas. The area in which the mobile terminal is presently located is determined on the basis of its assignment to one of the access points and the logical mapping. One or more links to area-specific services are assigned either directly to the access points or to areas that are covered by the network. It is preferred to assign the links to areas rather than to individual access points as this enables a more intuitive and user-friendly assignment of links to area-specific services to the various areas. In particular, this enables so called semantic localisation.

The present invention is particularly advantageous in that a single network component, such as a location server, can provide links to area-specific services to mobile terminals that are located in various areas covered by the network. In particular, the present invention avoids a need for a dedicated server per area.

In accordance with a preferred embodiment of the invention the location server generates area-specific lists of subscribers. The area-specific lists are used for providing corresponding links to area specific services to the subscribers.

It is to be noted that the present invention is particularly advantageous in that it enables a centralised directory for assigning links to area-specific services to areas. The centralised directory enables a user-friendly and intuitive entry and maintenance of the assignment of area-specific links to areas. In addition this solution is more reliable and robust in comparison to distributed approaches.

Another advantage is that the objects stored in the database tables for storage of the logical mappings are quite simple objects that can be used to make joint requests with other database tables.

It is a further advantage of the present invention that the assignment of mobile terminals to access points is used to determine the location of the mobile terminal. This avoids a need for special discovery and registration phases for the purposes of determining a mobile terminal's location.

### Brief description of the drawings

In the following preferred embodiments of the invention will be described by way of example only with reference to the drawings in which:
- Figure 1: is a block diagram of a preferred embodiment of a wireless network of the invention,
- Figure 2: is a flow diagram illustrating a preferred embodiment of a method of the invention,
- Figure 3: is a block diagram of a further preferred embodiment of a wireless network of the invention.

### Detailed description

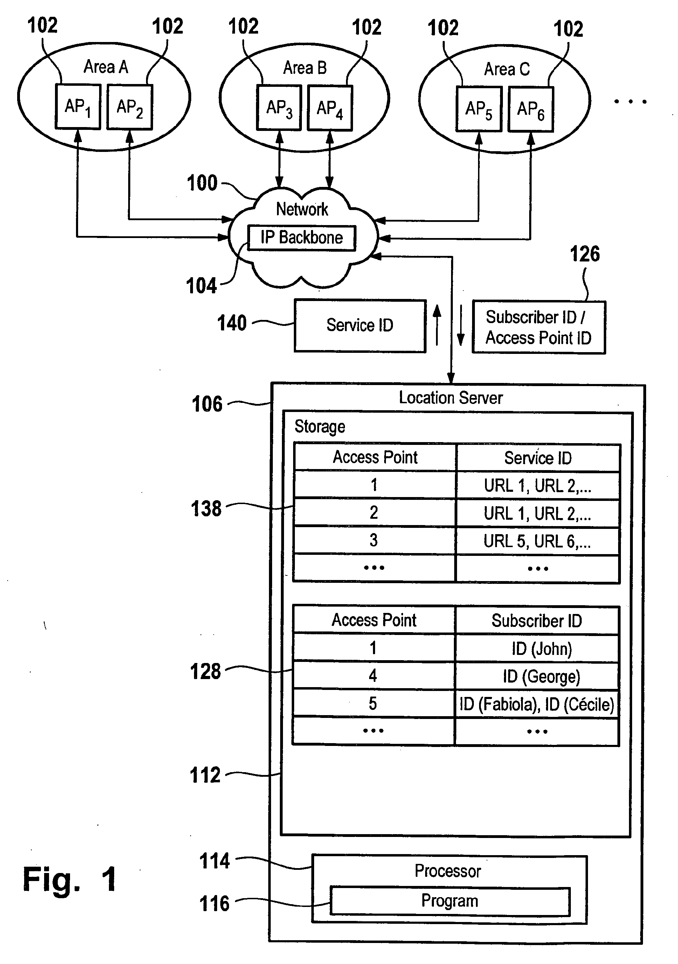

Figure 1 shows network 100 that provides wireless coverage to areas A, B, C,... Each one of the areas A, B, C,... has at least one access point 102 that is coupled to a network 100. For example, access points 102 coupled to network 100 provides a wireless local area network (WLAN) in compliance with the Wi-Fi standard provided by the Wi-Fi alliance.

Network 100 has IP backbone 104 through which location server 106 can communicate with components of network 100.

Location server 106 has storage 112 and processor 114 for running program 116. Program 116 controls operation of location server 106.

Storage 112 serves for storing of table 138 that assigns one or more uniform resource locaters (URLs) to each one of the access points 102. For example access point 102 AP ₁ of area A has assigned URL 1, URL 2, ... Access point 102 AP ₂ of the same area A has assigned the same or different URLs as the other access points of the same area A, i.e. access point 102 AP ₁. For most applications the URLs are area-specific such that access points 102 belonging to the same area have assigned the same URLs. Access point 102 AP ₃ has assigned URL 5, URL 6, ... , etc. It is to be noted that access to a service from a mobile terminal by entering a uniform resource locater (URL) is as such known from the prior art, e.g. by means of the wireless application protocol (WAP).

In operation location server 106 receives data 126 from network 100. Data 126 provides the identifier i of an access point APᵢ to which an active subscriber is currently assigned by network 100, For example, data 126 contains a tupple (subscriber identifier / access point identifier) for each active mobile terminal within the coverage of network 100, where the mobile subscriber identification number (MSISDN) serves as a subscriber ID. Alternatively a subscriber ID can be constituted by a combination of the subscribers log-in ID, its log-in password, and the IP address of his or her mobile terminal.

Based on the data 126 table 128 is generated. Table 128 is descriptive of the current assignment of subscribers to access points. Preferably table 128 is dynamic and is updated permanently as new data 126 is received by location server 106 from network 100.

For example subscriber John is located in area A and its mobile terminal is within the coverage of access point AP₁. Subscriber George is within area B and his mobile terminal is assigned to access point AP₄. Subscribers Fabiola and Cécile are located within area C and their respective mobile terminals are in the coverage of access point AP₅. This information is transmitted as data 126 from network 100 to location server 106 and entered into table 128.

Location server 106 provides a push service in order to communicate the access point specific URLs to the subscribers that are currently assigned to respective access points 102. In the example considered here location server 106 sends the list of URLs that are assigned to access point 102 AP ₁ to the subscribers that are currently assigned to the same access point 102 AP ₁.

For this purpose program 116 reads the list of URLs from table 138 and sends a push message to the subscribers that are currently assigned to the same access point AP ₁ in accordance with table 128. In the example considered here the subscriber John receives the list of URLs that are assigned to access point 102 AP ₁, i.e. URL 1, URL 2, ... from location server 106. The list of URLs is transmitted from location server 106 to the respective active mobile terminal as data 140.

Likewise subscriber George that is currently assigned to access point AP ₄ of area B receives URL 5, URL 6, ... , whereas subscribers Fabiola and Cecile receive the URLs that are assigned to access point 102 AP ₅ of area C.

After a subscriber has received the access point specific list of URLs he or she may select one or more of the URLs of the received list in order to use the respective service or services.

Location server 106 can be coupled to an instant messaging server (not shown in the drawing) that can provide instant messaging push services to active mobile terminals within the coverage of one of the access points 102 in order to push the respective URLs. For example, the instant messaging server uses the extensible messaging and presence protocol (XMPP) as provided by the IETF Internet Engineering Steering Group (IESG). XMPP is an open, XML-based protocol for a near real-time extensible messaging and presence. It is the core protocol of the Jabber instant messaging and presence technology.

In addition or as an alternative instant messaging server may use wireless village or SIMPLE (Session Initiation Protocol Extension for Instant Messaging). SIMPLE is an extension to the session initiation protocol (SIP) that allows to transfer instant messages.

Wireless village is another mobile instant messaging and presence (IMPS) initiative. Wireless village is based on prevalent protocols and other well-adapted standards such as SMS (short messaging services), MMS (multimedia messaging services), WAP (wireless application protocol), SIP and XML.

In case an instant messaging server is used for providing the push service of the URLs lists to the mobile terminals, location server 106 communicates with the instant messaging server through IP backbone 104 of network 100.

For example network 100 covers a museum, in area A of the museum 18th century paintings are exposed whereas in area B 19th century paintings and in area C 20th century paintings are exposed. The URLs that are assigned to access point 102 AP 1 of area A provide links to respective information regarding the paintings exposed in area A. As access point 102 AP ₂ is located in the same area A it has assigned the same list of URLs in table 138. Likewise the access points 102 of areas B and C have other lists of URLs that correspond to the paintings exposed in areas B and C respectively.

It is to be noted that the preferred embodiment considered here is particularly advantageous as a single location server 106 can provide location-specific services to the active mobile terminals that are located in the various areas covered by the network. Further, the assignment of location-specific services to areas covered by the network is flexible as it can be modified by editing table 138. In the above considered museum example this flexibility is particularly advantageous as it allows to modify the URLs for the next exhibition for which the boundaries of areas A, B, C ... and / or the URLs may change.

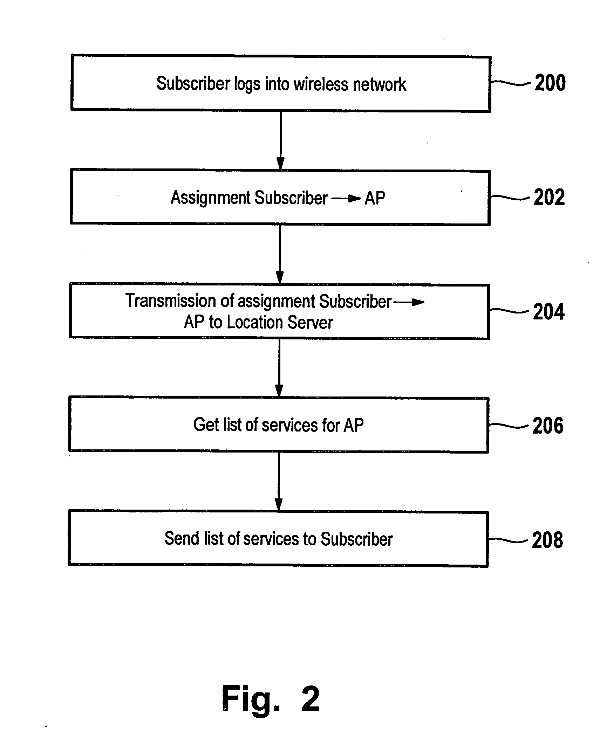

Figure 2 shows a corresponding flow chart.

In step 200 a subscriber logs into a wireless network and is assigned to one of the access points of the wireless network as a result of the registration procedure. For example, the user enters his or hers log-in ID and password. The subscriber's ID can be constituted by a combination of the log-in ID, password and the IP address of his or her mobile terminal. As a result of the registration procedure the subscriber is assigned to one of the access points AP of the network (step 202).

In step 204 the assignment of subscriber to access point IP is transmitted from the network to the location server. In response the location server reads the list of services that are assigned to the access point IP to which the subscriber is assigned. The list of services is then sent to the subscriber in step 208.

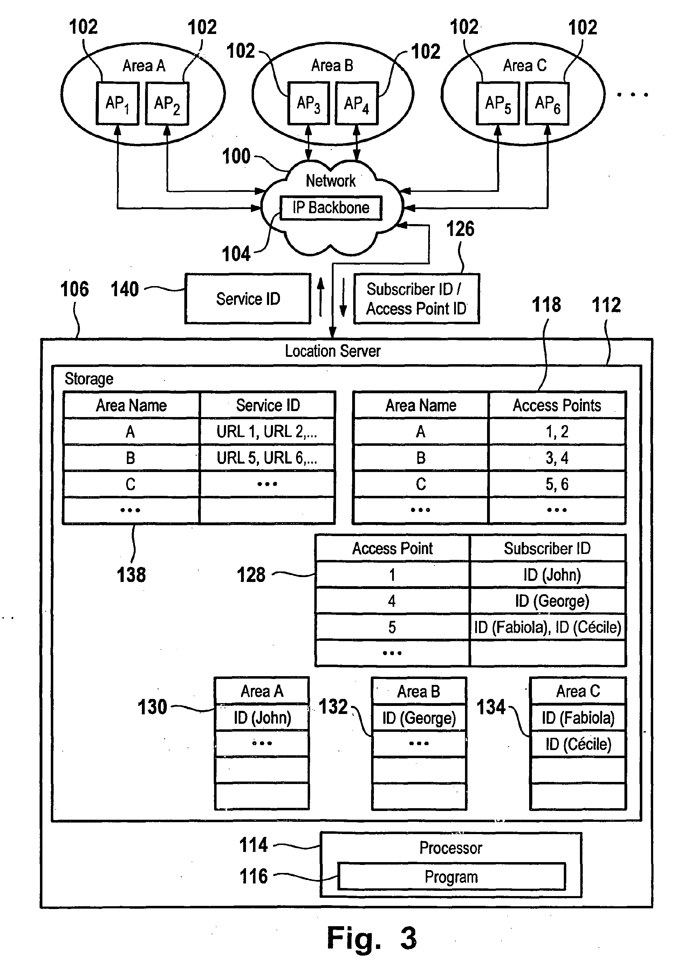

Figure 3 shows an alternative embodiment of location server 106. Elements of location server 106 of figure 3 that corresponds to elements of figure 1 are designated by the same reference numerals. Location server 106 of the embodiment of figure 3 has an additional mapping table 118.

Table 138 of figure 3 is area-specific and not access-point-specific as it is assumed that the various areas as defined in table 118 define the level of granularity for the logical mapping of the services.

In operation program 116 uses mapping table 118 and table 128 in order to generate area-specific lists 130, 132, 134, ... These lists are also referred to as 'buddy lists'. In other words, each one of the area-specific lists 130, 32, 134, ... contains a list of subscriber identifiers in order to identify subscribers having active mobile terminals within a corresponding area.

In order to provide the push service to active subscribers within one of the areas, program 116 reads the list of URLs assigned to that area from table 138 and sends data 140 containing that list to the subscribers as listed in the corresponding area-specific list. For example program 116 reads the URLs that are assigned to area A from table 138 and sends the corresponding data 140 to all subscribers as identified in area-specific list 130, etc.

This embodiment is particularly advantageous as maintenance and definition of areas and the assignment of services to areas is done by means of two separate tables which is more intuitive and user-friendly.

### List of Reference Numerals

- 100: Network
- 102: Access Point
- 104: IP backbone
- 106: Location server
- 108: Instant messaging server
- 110: Content server
- 112: Storage
- 114: Processor
- 116: Program
- 118: Mapping Tables
- 120: Storage
- 122: Processor
- 124: Data
- 126: Data
- 128: Table
- 130: Area specific list
- 132: Area specific list
- 134: Area specific list
- 136: Content
- 138: Table
- 140: Data

## Claims

1. A method of providing a link to an area-specific service to a mobile terminal via a wireless network covering at least two areas, each area having at least one access point, the method comprising:
- transmitting data being indicative of an assignment of the mobile terminal to one of the access points to a network component,
- accessing of data being indicative of an assignment of at least one link to the one of the access points by the network component,
- sending of the at least one link from the network component to the mobile terminal for a users selection of the area-specific service.

2. The method of claim 1, wherein the link is a uniform resource locater (URL).

3. The method of claim 1, further comprising identifying one of the areas in which the mobile terminal is located on the basis of a logical mapping of access points to areas, wherein the data is indicative of an assignment of the at least one link to one of the areas.

4. The method of claim 3, further comprising dynamically updating the logical mapping.

5. The method of claim 3, further comprising generating of area-specific lists being indicative of mobile terminals being located in the areas by the network component and providing of the at least one link to the mobile terminals that are located in the one of the areas.

6. A computer program product for providing a link to an area-specific service to a mobile terminal via a wireless network covering at least two areas, each area having at least one access point, the computer program product comprising instructions for:
- receiving data being indicative of an assignment of the mobile terminal to one of the access points,
- accessing of data being indicative of an assignment of at least one link to the one of the access points,
- sending of the at least one link to the mobile terminal for a users selection of the area-specific service.

7. The computer program product of claim 6, wherein the link is a uniform resource locator (URL).

8. The computer program product of claim 6, the instructions being adapted to identify one of the areas in which the mobile terminal is located on the basis of a logical mapping of access points to areas, wherein the data is indicative of an assignment of the at least one link to the one of the areas.

9. A location server for coupling to a wireless network comprising:
- a storage component (112) for storing of data being indicative of assignments of mobile terminals to access points (112) of the wireless network, for storing of a logical mapping (118) of the access points to areas covered by the wireless network, and for storing of a logical mapping of links to area-specific services to areas,
- data processing means (144, 116) for identification of the areas in which mobile terminals are located on the basis of the data (126, 128) being indicative of the assignments and the logical mapping, and for identification of the links that are assigned to an area in which the mobile terminals are located,
- transmission means (114, 116) for transmitting of the links to the mobile terminals.

10. A wireless cellular network covering at least two areas, each area having at least one access point and further comprising a location server being coupled to the wireless network having:
- a storage component (112) for storing of data being indicative of assignments of mobile terminals to access points (112) of the wireless network, for storing of a logical mapping (118) of the access points to areas covered by the wireless network, and for storing of a logical mapping of links to area-specific services to areas,
- data processing means (144, 116) for identification of the areas in which mobile terminals are located on the basis of the data (126, 128) being indicative of the assignments and the logical mapping, and for identification of the links that are assigned to an area in which the mobile terminals are located,
- transmission means (114, 116) for transmitting of the links to the mobile terminals.
